# EUROPÄISCHE PATENTANMELDUNG

(11) **EP 3 498 518 A1**
(43) Veröffentlichungstag der Anmeldung: **19.06.2019**
(21) Anmeldenummer: 18212294.5
(22) Anmeldetag: 13.12.2018
(51) Int. Cl.: B60L 1/00, B60L 9/24, B60L 50/53, B60L 50/40, B60L 50/51, E04G 21/02

(54) **BAUSTOFF-DRUCKLUFTFÖRDERER**

(30) Priorität: 15.12.2017 DE 102017222949
(71) Anmelder: Putzmeister Engineering GmbH, 72631 Aichtal (DE)
(72) Erfinder: Mögle, Peter, 70771 Leinfelden (DE); Petzold, Wolf-Michael, 73773 Aichwald (DE); Tausch, Werner, 73257 Köngen (DE)
(74) Vertreter: Patentanwälte Ruff, Wilhelm, Beier, Dauster & Partner mbB

(57) **Zusammenfassung**

Baustoff-Druckluftförderer (10), aufweisend:
- eine Drucklufteinheit (20), die zur Erzeugung von Druckluft (DL) ausgebildet ist,
- eine Baustoffeinheit (30), die zur Bereitstellung von Baustoff (BS) ausgebildet ist und mit der Drucklufteinheit (20) für einen Fluss von Druckluft (DL) aus der Drucklufteinheit (20) heraus in die Baustoffeinheit (30) hinein zur Förderung eines Flusses von Baustoff (BS) mittels Druckluft (DL) aus der Baustoffeinheit (30) heraus verbunden ist,
- eine Elektroantriebsmotoreinheit (40), die zum Antrieb des Baustoff-Druckluftförderers (10) ausgebildet ist,
- einen Elektrizitätsnetzanschluss (50), der mit der Elektroantriebsmotoreinheit (40) zur Speisung der Elektroantriebsmotoreinheit (40) mit elektrischer Leistung (Pin) verbunden ist, und
- eine Kondensatoreinheit (60), die mit dem Elektrizitätsnetzanschluss (50) zur Aufnahme von der Elektroantriebsmotoreinheit (40) nicht benötigter elektrischer Leistung (Pex) vom Elektrizitätsnetzanschluss (50) verbunden und ausgebildet ist, und die mit der Elektroantriebsmotoreinheit (40) zur Abgabe von der Elektroantriebsmotoreinheit (40) benötigter elektrischer Leistung (Pde) zusätzlich zur elektrischen Leistung (Pin) vom Elektrizitätsnetzanschluss (50) verbunden und ausgebildet ist.

## Beschreibung

Der Erfindung liegt als Aufgabe die Bereitstellung eines Baustoff-Druckluftförderers zugrunde, der eine möglichst hohe Leistung bei begrenzt zur Verfügung stehender elektrischer Anschlussleistung ermöglicht.

Die Erfindung löst diese Aufgabe durch die Bereitstellung eines Baustoff-Druckluftförderers mit den Merkmalen des Anspruchs 1. Vorteilhafte Weiterbildungen und/oder Ausgestaltungen der Erfindung sind in den abhängigen Ansprüchen beschrieben.

Der erfindungsgemäße Baustoff-Druckluftförderer weist eine Drucklufteinheit, eine Baustoffeinheit, eine, insbesondere elektrisch steuerbare, Elektroantriebsmotoreinheit, einen Elektrizitätsnetzanschluss und eine, insbesondere elektrische, Kondensatoreinheit auf. Die Drucklufteinheit ist zur Erzeugung von Druckluft ausgebildet beziehungsweise vorgesehen. Die Baustoffeinheit ist zur Bereitstellung von Baustoff ausgebildet beziehungsweise vorgesehen. Des Weiteren ist die Baustoffeinheit mit der Drucklufteinheit für einen Fluss von, insbesondere erzeugter, Druckluft aus der Drucklufteinheit heraus in die Baustoffeinheit hinein zur Förderung eines Flusses von, insbesondere bereitgestelltem, Baustoff mittels Druckluft aus der Baustoffeinheit heraus, insbesondere flusstechnisch, verbunden. Die Elektroantriebsmotoreinheit ist zum Antrieb des Baustoff-Druckluftförderers, insbesondere der Drucklufteinheit, ausgebildet beziehungsweise vorgesehen. Der Elektrizitätsnetzanschluss ist mit der Elektroantriebsmotoreinheit zur Speisung beziehungsweise Versorgung der Elektroantriebsmotoreinheit mit elektrischer Leistung beziehungsweise elektrischer Energie, insbesondere elektrisch, verbunden. Die Kondensatoreinheit ist mit dem Elektrizitätsnetzanschluss zur Aufnahme von der Elektroantriebsmotoreinheit, insbesondere temporär beziehungsweise in einem ersten Zeitraum, nicht benötigter beziehungsweise überschüssiger elektrischer Leistung beziehungsweise elektrischer Energie vom Elektrizitätsnetzanschluss, insbesondere elektrisch, verbunden und ausgebildet. Außerdem ist die Kondensatoreinheit mit der Elektroantriebsmotoreinheit zur Abgabe von der Elektroantriebsmotoreinheit, insbesondere temporär beziehungsweise in einem von dem ersten verschiedenen, zweiten Zeitraum, benötigter elektrischer Leistung beziehungsweise elektrischer Energie zusätzlich zur elektrischen Leistung vom Elektrizitätsnetzanschluss, insbesondere elektrisch, verbunden und ausgebildet.

Mittels des Elektrizitätsnetzanschlusses kann der Baustoff-Druckluftförderer an einen elektrischen Baustellennetzanschluss, insbesondere eines Baustromverteilerkastens, elektrisch angeschlossen sein. Typischerweise stellt der Baustellennetzanschluss nur eine begrenzte elektrische Leistung bereit beziehungsweise ist auf eine bestimmte elektrische Leistungsbelastung begrenzt. Der Baustoff-Druckluftförderer, insbesondere seine Kondensatoreinheit, ermöglicht, dass der Elektroantriebsmotoreinheit mindestens zeitweise beziehungsweise phasenweise mehr elektrische Leistung zur Verfügung steht als von dem Baustellennetzanschluss bereitgestellt. Dies ermöglicht, dass die Elektroantriebsmotoreinheit für eine elektrische Leistung, insbesondere eine Eingangsleistung, von mehr als der durch den Baustellennetzanschluss beziehungsweise den Elektrizitätsnetzanschluss bereitgestellten Leistung ausgebildet beziehungsweise ausgelegt sein kann. Dies wiederum ermöglicht, dass der Baustoff-Druckluftförderer eine Baustoff-Förderleistung beziehungsweise eine Leistungsfähigkeit mindestens zeitweise aufweisen kann, welche höher sein kann als bei einem nicht erfindungsgemäßen Baustoff-Druckluftförderer ohne Kondensatoreinheit. Einen, insbesondere kurzzeitigen, hohen Leistungsbedarf beziehungsweise eine Leistungsspitze der Elektroantriebsmotoreinheit des erfindungsgemäßen Baustoff-Druckluftförderers können der Elektrizitätsnetzanschluss beziehungsweise der Baustellennetzanschluss und zusätzlich die Kondensatoreinheit decken, insbesondere gleichzeitig. Während Phasen mit geringem Leistungsbedarf kann die Kondensatoreinheit die nicht benötigte elektrische Leistung des Elektrizitätsnetzanschlusses aufnehmen. In anderen Worten: bei Überlast wird die Kondensatoreinheit angezapft, bei Leistungsreserve wird die Kondensatoreinheit geladen. Dies ermöglicht, den Baustellennetzanschluss beziehungsweise den Elektrizitätsnetzanschluss zeitlich kontinuierlich bis zu 100 Prozent elektrisch auszunutzen beziehungsweise auszulasten.

Insbesondere kann der Elektrizitätsnetzanschluss als Netzspannungsanschluss bezeichnet werden. Die Aufnahme kann als Speisung oder Aufladung der Kondensatoreinheit bezeichnet werden. Die Abgabe kann als Entladung der Kondensatoreinheit oder Speisung der Elektroantriebsmotoreinheit bezeichnet werden.

Die Elektroantriebsmotoreinheit kann einen mit Drehstrom betreibbaren Elektromotor aufweisen, insbesondere einen Synchronmotor oder einen Asynchronmotor. Die elektrische Leistung/Energie kann dazu dienen, die Elektroantriebsmotoreinheit anzutreiben.

Die Elektroantriebsmotoreinheit kann elektrische Leistung/Energie, insbesondere Eingangsleistung, welche der Elektroantriebsmotoreinheit zur Verfügung steht/bereitgestellt wird, in mechanische Leistung, insbesondere Ausgangsleistung, umwandeln.

Die Drucklufteinheit kann zur Erzeugung von Druckluft mit einem Druck von 0 bis 12 bar ausgebildet sein. Des Weiteren braucht die Drucklufteinheit nicht für Baustoff geeignet zu sein. Außerdem kann der Baustoff-Druckluftförderer beziehungsweise seine Drucklufteinheit einen Luft-Druckspeicher aufweisen, braucht aber keinen Luft-Druckspeicher aufzuweisen.

Die Baustoffeinheit kann zur Bereitstellung von Baustoff in einem förderfähigen Zustand ausgebildet sein. Der Baustoff kann als Baumaterial bezeichnet werden. Insbesondere kann die Baustoffeinheit zur Bereitstellung von Dickstoff ausgebildet sein, wie Mörtel, Zement, Estrich, Beton und/oder Putz. Zusätzlich oder alternativ kann die Baustoffeinheit zur Bereitstellung von Sand, Riesel und/oder Kies ausgebildet sein.

Zur Förderung eines Flusses von Baustoff mittels Druckluft aus der Baustoffeinheit heraus kann die Druckluft auf den Baustoff einwirken, insbesondere direkten Kontakt mit dem Baustoff aufweisen, und/oder die Baustoffeinheit kann dazu ausgebildet sein. Die Druckluft kann als Förderluft bezeichnet werden.

In einer Weiterbildung der Erfindung weist der Elektrizitätsnetzanschluss einen 32 Ampere (A)-Netzstecker auf. Dies ermöglicht den Baustoff-Druckluftförderer an den Baustellennetzanschluss mit einer maximalen Strombelastung begrenzt beziehungsweise netzabgesichert auf maximal 32 A, und insbesondere mit 400 Volt (V), anzuschließen. Insbesondere kann der 32 A-Netzstecker als elektrischer Drehstromsteckverbinder ausgebildet beziehungsweise verkörpert sein, insbesondere als CEE Drehstromsteckverbinder nach Norm IEC 60309. Somit kann der 32 A-Netzstecker eine Form aufweisen, die von einem 16 A-Netzstrecker und/oder einem 63 A-Netzstecker verschieden sein kann. Der 32 A-Netzstecker kann derart ausgebildet sein, dass er in eine korrespondierende Buchse des Baustellennetzanschlusses beziehungsweise des Baustromverteilerkastens einsteckbar ist. Die Buchse des Baustellennetzanschlusses beziehungsweise des Baustromverteilerkastens kann einen herkömmlichen Drehstromanschluss mit einer begrenzten elektrischen Anschlussleistung zur Verfügung stellen. Insbesondere kann die Anschlussleistung auf S = √3 x I x U = √3 x 32 A x 400 V = 22 kVA = 22 kW (Kilowatt) begrenzt sein.

In einer Weiterbildung der Erfindung ist die Elektroantriebsmotoreinheit für eine elektrische Leistung, insbesondere eine Eingangsleistung, von mehr als 22 kW ausgebildet beziehungsweise ausgelegt. In anderen Worten: bei Vorhandensein des 32 A-Netzsteckers ist somit die Elektroantriebsmotoreinheit für eine elektrische Leistung von mehr als der durch den auf 32 A begrenzten Baustellennetzanschluss bereitgestellten Leistung ausgebildet. Einen Leistungsbedarf, insbesondere von mehr als 22 KW, der Elektroantriebsmotoreinheit können der Elektrizitätsnetzanschluss beziehungsweise der Baustellennetzanschluss und zusätzlich die Kondensatoreinheit mindestens zeitweise decken. Dies ermöglicht, dass der Baustoff-Druckluftförderer eine Baustoff-Förderleistung mindestens zeitweise aufweisen kann, welche höher sein kann als bei einem nicht erfindungsgemäßen Baustoff-Druckluftförderer mit 32 A-Netzstecker, aber ohne Kondensatoreinheit.

In einer Weiterbildung der Erfindung ist die Kondensatoreinheit für eine elektrische Leistung, insbesondere eine Aufnahme- und/oder Abgabeleistung beziehungsweise eine Auf- und/oder Entladeleistung, von minimal 5 kW, insbesondere von minimal 10kW, insbesondere von minimal 15 kW, insbesondere von 22 kW, ausgebildet beziehungsweise ausgelegt. Zusätzlich oder alternativ weist die Kondensatoreinheit eine elektrische Kapazität von minimal 0,1 Kilowattstunden (kWh) auf, insbesondere von minimal 0,2 kWh, insbesondere von minimal 0,5 kWh, beziehungsweise die Kondensatoreinheit ist zur Aufnahme/Speicherung von elektrischer Energie dieser Menge ausgebildet beziehungsweise ausgelegt. Somit ist die Aufnahmeleistung, insbesondere von 22 kW, bei Vorhandensein des 32 A-Netzsteckers ausreichend. Des Weiteren ist somit die Abgabeleistung bei Vorhandensein des 32 A-Netzsteckers und der Elektroantriebsmotoreinheit für eine Leistung von mehr als 22 kW ausreichend. Typischerweise ist der Leistungsbedarf der Elektroantriebsmotoreinheit für wenige Sekunden oder Minuten (min), insbesondere 1, 2 oder 3 min, erhöht. Somit kann die Kapazität, insbesondere von minimal 1 min x 5 kW = 0,1 kWh, ausreichend sein.

Zusätzlich oder alternativ kann der Elektrizitätsnetzanschluss einen 16 A-Netzstecker aufweisen. Entsprechend kann die Anschlussleistung auf S = √3 x l x U = √3 x 16 A x 400 V = 11 kVA = 11 kW begrenzt sein. Weiter zusätzlich oder alternativ kann die Elektroantriebsmotoreinheit für eine elektrische Leistung von mehr als 11 kW ausgebildet sein. Weiter zusätzlich oder alternativ kann die Kondensatoreinheit für eine elektrische Leistung von minimal 2,5 kW, insbesondere von minimal 5 kW, insbesondere von 11 kW, ausgebildet sein. Weiter zusätzlich oder alternativ kann die Kondensatoreinheit eine elektrische Kapazität von minimal 0,05 kWh aufweisen, insbesondere von minimal 0,1 kWh, insbesondere von minimal 0,25 kWh.

Zusätzlich oder alternativ kann der Elektrizitätsnetzanschluss einen 63 A-Netzstecker aufweisen. Entsprechend kann die Anschlussleistung auf S = √3 x l x U = √3 x 63 A x 400V = 44 kVA = 44 kW begrenzt sein. Weiter zusätzlich oder alternativ kann die Elektroantriebsmotoreinheit für eine elektrische Leistung von mehr als 44 kW ausgebildet sein. Weiter zusätzlich oder alternativ kann die Kondensatoreinheit für eine elektrische Leistung von minimal 10 kW, insbesondere von minimal 20 kW, insbesondere von minimal 30 kW, insbesondere von minimal 40 kW, insbesondere von 44 kW, ausgebildet sein. Weiter zusätzlich oder alternativ kann die Kondensatoreinheit eine elektrische Kapazität von minimal 0,2 kWh aufweisen, insbesondere von minimal 0,4 kWh, insbesondere von minimal 1 kWh.

In einer Weiterbildung der Erfindung weist die Kondensatoreinheit mindestens einen elektrochemischen Kondensator auf oder ist ein elektrochemischer Kondensator. Dies ermöglicht eine hohe Lebensdauer und eine hohe Zyklusfestigkeit, insbesondere eines Aufnahme- und Abgabezykluses, sowie eine schnelle Aufnahme/Abgabe. Der elektrochemische Kondensator kann als Superkondensator oder Ultrakondensator bezeichnet werden.

In einer Weiterbildung der Erfindung weist der Baustoff-Druckluftförderer eine Frequenzumrichtereinheit mit einem Zwischenkreis auf. Der Elektrizitätsnetzanschluss ist mittels der Frequenzumrichtereinheit, insbesondere mittels seines Zwischenkreises, mit der Elektroantriebsmotoreinheit, insbesondere elektrisch, verbunden. Des Weiteren ist der Elektrizitätsnetzanschluss mittels des Zwischenkreises mit der Kondensatoreinheit, insbesondere elektrisch, verbunden. Die Kondensatoreinheit ist mittels des Zwischenkreises mit der Elektroantriebsmotoreinheit, insbesondere elektrisch, verbunden. Dies ermöglicht eine Drehzahl der Elektroantriebsmotoreinheit zu steuern, insbesondere zu regeln. In anderen Worten: die Frequenzumrichtereinheit kann zwischen dem Elektrizitätsnetzanschluss und der Elektroantriebsmotoreinheit elektrisch angeordnet sein. Der Zwischenkreis kann zwischen dem Elektrizitätsnetzanschluss und der Kondensatoreinheit elektrisch angeordnet sein. Des Weiteren kann der Zwischenkreis zwischen der Kondensatoreinheit und der Elektroantriebsmotoreinheit elektrisch angeordnet sein. Insbesondere kann der Zwischenkreis ein Gleichspannungs-Zwischenkreis beziehungsweise ein Gleichstrom-Zwischenkreis sein.

In einer Ausgestaltung der Erfindung weist der Baustoff-Druckluftförderer einen bidirektionalen Gleichstromsteller auf. Die Kondensatoreinheit ist mittels des bidirektionalen Gleichstromstellers mit dem Zwischenkreis, insbesondere elektrisch, verbunden. Dies ermöglicht, einen Fluss von elektrischer Leistung zu oder von der Kondensatoreinheit zu steuern, insbesondere zu regeln. In anderen Worten: der Gleichstromsteller kann zwischen der Kondensatoreinheit und dem Zwischenkreis elektrisch angeordnet sein. Der Gleichstromsteller kann als Gleichspannungswandler bezeichnet werden.

In einer Weiterbildung der Erfindung weist der Baustoff-Druckluftförderer eine, insbesondere elektrische, Steuereinheit auf. Die Steuereinheit ist dazu ausgebildet beziehungsweise vorgesehen, den Baustoff-Druckluftförderer derart anzusteuern, insbesondere automatisch, dass vor einer Förderung eines Flusses von Baustoff beziehungsweise in einem nichtfördernden Betriebszustand des Baustoff-Druckluftförderers die Kondensatoreinheit elektrische Leistung vom Elektrizitätsnetzanschluss aufnimmt und dass zur Förderung eines Flusses von Baustoff beziehungsweise in einem fördernden Betriebszustand mindestens zu Beginn beziehungsweise zum Start die Kondensatoreinheit, insbesondere die aufgenommene, elektrische Leistung an die Elektroantriebsmotoreinheit abgibt. Dies ermöglicht, dass der Baustoff-Druckluftförderer eine Baustoff-Förderleistung aufweisen kann, welche höher sein kann als bei einem nicht erfindungsgemäßen Baustoff-Druckluftförderer ohne Kondensatoreinheit. Dies kann als intelligentes Leistungs-/Energiemanagement bezeichnet werden. Typischerweise gibt es zu Beginn der Förderung beziehungsweise der Förderphase einen erhöhten Leistungsbedarf der Elektroantriebsmotoreinheit, bis sich Baustoff aus der Baustoffeinheit in Bewegung setzt. Insbesondere kann die Förderung gestartet werden, indem erzeugte Druckluft aus der Drucklufteinheit heraus in die Baustoffeinheit hineinfließen kann beziehungsweise hineingeleitet werden kann. Der erhöhte Leistungsbedarf der Elektroantriebsmotoreinheit kann durch die Erzeugung von Druckluft durch die Drucklufteinheit verursacht sein. Die Steuereinheit kann ein Computer, Mikrokontroller oder eine mechanische Schaltung sein.

In einer Weiterbildung der Erfindung weist die Elektroantriebsmotoreinheit einen ersten Elektromotor auf, der zum Antrieb der Drucklufteinheit ausgebildet beziehungsweise vorgesehen ist. Des Weiteren weist die Elektroantriebsmotoreinheit einen von dem ersten verschiedenen beziehungsweise unabhängigen, zweiten Elektromotor auf, der zum Antrieb der Baustoffeinheit ausgebildet beziehungsweise vorgesehen ist. Der Baustoff-Druckluftförderer weist eine, insbesondere die, Steuereinheit auf. Die Steuereinheit ist dazu ausgebildet, ein Verhältnis zwischen einer elektrischen Leistung für den ersten Elektromotor und einer elektrischen Leistung für den zweiten Elektromotor, insbesondere automatisch, zu verändern. Dies ermöglicht, die, insbesondere von dem Baustellennetzanschluss beziehungsweise dem Elektrizitätsnetzanschluss und der Kondensatoreinheit insgesamt zur Verfügung stehende beziehungsweise gestellte, elektrische Leistung zwischen mindestens dem ersten Elektromotor und dem zweiten Elektromotor zu verteilen. Insbesondere kann die Steuereinheit dazu ausgebildet sein, vor einer Förderung eines Flusses von Baustoff das Verhältnis zugunsten des zweiten Elektromotors für die Baustoffeinheit zu verändern und zur Förderung eines Flusses von Baustoff mindestens zu Beginn das Verhältnis zugunsten des ersten Elektromotors für die Drucklufteinheit zu verändern. Zusätzlich kann der Baustoff-Druckluftförderer mindestens einen weiteren elektrischen Verbraucher, wie einen Lüfter, einen Beschicker und/oder einen Schrapper, aufweisen und die Steuereinheit kann dazu ausgebildet sein, ein Verhältnis zwischen einer elektrischen Leistung für den ersten Elektromotor und einer elektrischen Leistung für den zweiten Elektromotor, insbesondere automatisch, und einer elektrischen Leistung für den weiteren Verbraucher zu verändern, insbesondere in Abhängigkeit von Lastfaktoren wie Förderdruck, Förderweite, Förderhöhe, Förderquerschnitt, Baustoff beziehungsweise Baustoffzusammensetzung und/oder Kühlmitteltemperatur. Dies kann als intelligentes Leistungs-/Energiemanagement bezeichnet werden. Die Steuereinheit kann ein Computer, Mikrokontroller oder eine mechanische Schaltung sein.

In einer Weiterbildung der Erfindung weist die Drucklufteinheit eine Luftkompressoreinheit auf. Die Luftkompressoreinheit ist zur Erzeugung von Druckluft ausgebildet beziehungsweise vorgesehen. Die Elektroantriebsmotoreinheit ist zum Antrieb der Luftkompressoreinheit ausgebildet beziehungsweise vorgesehen. Insbesondere kann die Luftkompressoreinheit als Luftverdichtereinheit bezeichnet werden.

In einer Weiterbildung der Erfindung weist die Baustoffeinheit eine Mischeinheit auf. Die Mischeinheit ist zur Mischung beziehungsweise zur Herstellung von Baustoff ausgebildet beziehungsweise vorgesehen. Die Elektroantriebsmotoreinheit ist zum Antrieb der Mischeinheit ausgebildet beziehungsweise vorgesehen. Insbesondere kann die Mischeinheit einen Mischbehälter und ein Mischwerk zur Mischung von Baustoff aufweisen, wobei die Elektroantriebsmotoreinheit zum Antrieb des Mischwerks ausgebildet sein kann. Typischerweise kann vor einer Förderung eines Flusses von Baustoff der Leistungsbedarf der Elektromotorantriebseinheit, insbesondere für die Mischeinheit, gering sein und die Kondensatoreinheit kann die nicht benötigte elektrische Leistung aufnehmen. Insbesondere kann die Mischeinheit vor der Förderung mit Baustoff befüllt werden und diesen mischen.

In einer Weiterbildung der Erfindung ist der Baustoff-Druckluftförderer als mobiler Baustoff-Druckluftförderer ausgebildet. Dies ermöglicht einen einfachen Transport des Baustoff-Druckluftförderers, insbesondere zu oder von einer Baustelle. Insbesondere kann die Kondensatoreinheit, insbesondere im Vergleich zu einem Luft-Druckspeicher, ein relativ kleines Volumen und/oder eine relativ geringe Masse aufweisen und somit eine relativ kompakte Ausbildung ermöglichen.

In einer Ausgestaltung der Erfindung weist der Baustoff-Druckluftförderer ein, insbesondere gemeinsames, Fahrgestell auf. Das Fahrgestell trägt die Drucklufteinheit, die Baustoffeinheit, die Elektroantriebsmotoreinheit, den Elektrizitätsnetzanschluss und die Kondensatoreinheit. In anderen Worten: die Drucklufteinheit, die Baustoffeinheit, die Elektroantriebsmotoreinheit, der Elektrizitätsnetzanschluss und die Kondensatoreinheit können auf dem Fahrgestell angeordnet sein. Zusätzlich kann das Fahrgestell die Frequenzumrichtereinheit, soweit vorhanden, den Gleichstromsteller, soweit vorhanden, und/oder die Steuereinheit, soweit vorhanden, tragen.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: einen Schaltplan eines erfindungsgemäßen Baustoff-Druckluftförderers,
- Fig. 2: einen Graph einer elektrischen Leistung des Baustoff-Druckluftförderers der Fig. 1 über der Zeit und
- Fig. 3: eine Perspektivansicht des Baustoff-Druckluftförderers der Fig. 1.

### DETAILLIERTE BESCHREIBUNG DER AUSFÜHRUNGSBEISPIELE

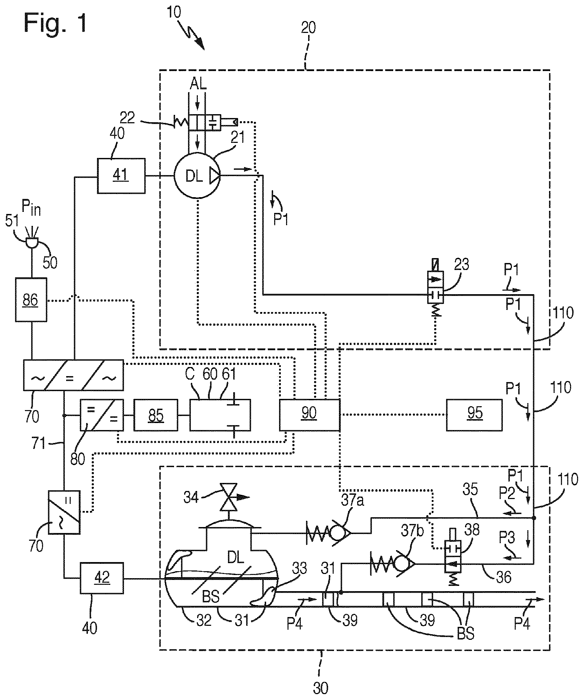

Der erfindungsgemäße Baustoff-Druckluftförderer 10 weist eine Drucklufteinheit 20, eine Baustoffeinheit 30, eine Elektroantriebsmotoreinheit 40, einen Elektrizitätsnetzanschluss 50 und eine Kondensatoreinheit 60 auf, wie in Fig. 1 zu erkennen. Die Drucklufteinheit 20 ist zur Erzeugung von Druckluft DL ausgebildet. Die Baustoffeinheit 30 ist zur Bereitstellung von Baustoff BS ausgebildet. Des Weiteren ist die Baustoffeinheit 30 mit der Drucklufteinheit 20 für einen Fluss von Druckluft DL aus der Drucklufteinheit 20 heraus in die Baustoffeinheit 30 hinein zur Förderung eines Flusses von Baustoff BS mittels Druckluft DL aus der Baustoffeinheit 30 heraus verbunden. Die Elektroantriebsmotoreinheit 40 ist zum Antrieb des Baustoff-Druckluftförderers 10 ausgebildet. Der Elektrizitätsnetzanschluss 50 ist mit der Elektroantriebsmotoreinheit 40 zur Speisung der Elektroantriebsmotoreinheit 40 mit elektrischer Leistung Pin verbunden. Die Kondensatoreinheit 60 ist mit dem Elektrizitätsnetzanschluss 50 zur Aufnahme von der Elektroantriebsmotoreinheit 40 nicht benötigter elektrischer Leistung Pex vom Elektrizitätsnetzanschluss 50 verbunden und ausgebildet. Außerdem ist die Kondensatoreinheit 60 mit der Elektroantriebsmotoreinheit 40 zur Abgabe von der Elektroantriebsmotoreinheit 40 benötigter elektrischer Leistung Pde zusätzlich zur elektrischen Leistung Pin vom Elektrizitätsnetzanschluss 50 verbunden und ausgebildet.

Im Detail weist die Drucklufteinheit 20 eine Luftkompressoreinheit 21 in Form eines Schraubenverdichters auf. Die Luftkompressoreinheit 21 ist zur Erzeugung von Druckluft DL ausgebildet. Die Elektroantriebsmotoreinheit 40 ist zum Antrieb der Luftkompressoreinheit 21 ausgebildet.

Weiter weist im gezeigten Ausführungsbeispiel die Drucklufteinheit 20 einen, insbesondere elektrisch steuerbaren, Ansaugregler 22 auf. Die Luftkompressoreinheit 21 ist zur Ansaugung von Luft AL zur Erzeugung von Druckluft DL ausgebildet. Der Ansaugregler 22 ist zur Regelung eines Flusses von durch die Luftkompressoreinheit 21 angesaugter Luft AL ausgebildet. In alternativen Ausführungsbeispielen braucht die Drucklufteinheit keinen Ansaugregler aufzuweisen.

Zudem weist im gezeigten Ausführungsbeispiel der Baustoff-Druckluftförderer 10 eine Druckluft-Förderleitung 110 auf. Die Druckluft-Förderleitung 110 ist für einen Fluss von Druckluft DL aus der Drucklufteinheit 20 heraus beziehungsweise von ihrer Luftkompressoreinheit 21 in die Baustoffeinheit 30 hinein zur Förderung eines Flusses von Baustoff BS mittels Druckluft DL aus der Baustoffeinheit 30 heraus ausgebildet, wie in Fig. 1 durch Pfeile P1 angedeutet.

Des Weiteren weist im gezeigten Ausführungsbeispiel der Baustoff-Druckluftförderer 10 beziehungsweise seine Drucklufteinheit 20 ein, insbesondere elektrisch steuerbares, Regelventil 23 auf, insbesondere ein Freigabe- und Absperrventil in Form eines 2/2 Wegeventils. Das Regelventil 23 ist an der Druckluft-Förderleitung 110 dazu angeordnet beziehungsweise ausgebildet, einen Fluss von Druckluft DL aus der Drucklufteinheit 20 heraus beziehungsweise von ihrer Luftkompressoreinheit 21 durch die Druckluft-Förderleitung 110 hindurch in die Baustoffeinheit 30 hinein zu regeln, insbesondere freizugeben oder abzusperren. In alternativen Ausführungsbeispielen braucht der Baustoff-Druckluftförderer beziehungsweise seine Drucklufteinheit kein Regelventil aufzuweisen.

Im gezeigten Ausführungsbeispiel ist die Baustoffeinheit 30 zur Bereitstellung von Dickstoff ausgebildet, insbesondere von Estrich.

Im Detail weist die Baustoffeinheit 30 eine Mischeinheit 31 auf. Die Mischeinheit 31 ist zur Mischung von Baustoff BS ausgebildet. Die Elektroantriebsmotoreinheit 40 ist zum Antrieb der Mischeinheit 31 ausgebildet.

Im gezeigten Ausführungsbeispiel weist die Mischeinheit 31 einen Mischbehälter 32 und ein Mischwerk 33 zur Mischung von Baustoff BS auf, wobei die Elektroantriebsmotoreinheit 40 zum Antrieb des Mischwerks 33 ausgebildet ist.

In alternativen Ausführungsbeispielen braucht die die Baustoffeinheit keine Mischeinheit aufzuweisen. Zusätzlich oder alternativ braucht in alternativen Ausführungsbeispielen die Elektroantriebsmotoreinheit nicht zum Antrieb der Baustoffeinheit ausgebildet oder vorgesehen zu sein.

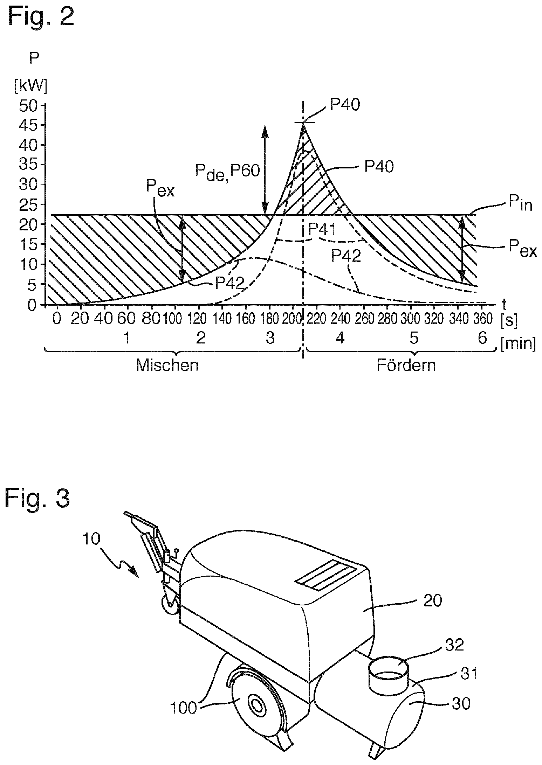

Außerdem weist im gezeigten Ausführungsbeispiel die Baustoffeinheit 30 einen Entlüftungshahn 34 auf, welcher an dem Mischbehälter 32 zur Entlüftung des Mischbehälters 32 angeordnet ist, insbesondere bei einer Befüllung beziehungsweise Auffüllung des Mischbehälters 32 mit Baustoff BS. Im Detail weist die Baustoffeinheit 30 beziehungsweise ihr Mischbehälter 32 eine Einfüllöffnung auf, wie in Fig. 3 zu erkennen, über welche der Mischbehälter 32, insbesondere diskontinuierlich, mit Baustoff BS befüllt werden kann. Nach einer Befüllung kann die Einfüllöffnung verschlossen werden und der Mischbehälter 32 kann mit Druckluft DL befüllt beziehungsweise beaufschlagt werden.

Weiter weist im gezeigten Ausführungsbeispiel die Baustoffeinheit 30 beziehungsweise ihr Mischbehälter 32 einen Abgangsstutzen 39 in Form eines Förderrohrs auf. Insbesondere ist die Baustoffeinheit 30 beziehungsweise ihr Mischbehälter 32 beziehungsweise ihr Abgangsstutzen 39 zum, insbesondere lösbaren, Anschluss einer Baustoff-Förderleitung, wie eines Förderschlauchs, für einen Fluss von Baustoff BS mittels Druckluft DL aus der Baustoffeinheit 30 heraus ausgebildet. In alternativen Ausführungsbeispielen braucht die Baustoffeinheit keinen Abgangsstutzen aufzuweisen.

Zudem weist im gezeigten Ausführungsbeispiel die Baustoffeinheit 30 eine Oberluftleitung oder Behältereinleitung 35 für einen Fluss von Druckluft DL von der Drucklufteinheit 20 in die Mischeinheit 31 beziehungsweise ihren Mischbehälter 32 hinein zur Förderung eines Flusses von Baustoff BS mittels Druckluft DL aus der Mischeinheit 31 beziehungsweise ihrem Mischbehälter 21 heraus auf, wie in Fig. 1 durch Pfeile P2, P4 angedeutet.

Des Weiteren weist im gezeigten Ausführungsbeispiel die Baustoffeinheit 30 eine Unterluftleitung oder Abgangsstutzeneinleitung 36 für einen Fluss von Druckluft DL von der Drucklufteinheit 20 in den Abgangsstutzen 39 hinein zur Förderung eines Flusses von Baustoff BS mittels Druckluft DL durch den Abgangsstutzen 39 hindurch auf, wie in Fig. 1 durch Pfeile P3, P4 angedeutet. In alternativen Ausführungsbeispielen braucht die Baustoffeinheit keine Unterluftleitung aufzuweisen.

Im gezeigten Ausführungsbeispiel gehen die Oberluftleitung 35 und die Unterluftleitung 36, insbesondere innerhalb der Baustoffeinheit 30, von der Druckluft-Förderleitung 110 ab. In anderen Worten: die Oberluftleitung 35 und die Unterluftleitung 36 beziehungsweise jeweilige Leitungsanfänge von diesen sind mit der Drucklufteinheit 20 durch die Druckluft-Förderleitung 110 flusstechnisch verbunden, insbesondere für einen Fluss von Druckluft DL aus der Drucklufteinheit 20 heraus. Die Druckluft-Förderleitung 110 des gezeigten Ausführungsbeispiels kann als Druckluft-Förderverteilleitung bezeichnet werden.

Außerdem weist im gezeigten Ausführungsbeispiel der Baustoff-Druckluftförderer 10 mindestens ein Rückschlagventil 37a, 37b in Form eines Rückschlagklappenventils auf, im gezeigten Ausführungsbeispiel zwei. Das mindestens eine Rückschlagventil 37a, 37b ist an der Baustoffeinheit 30 dazu angeordnet beziehungsweise ausgebildet, einen Fluss von Baustoff BS aus der Baustoffeinheit 30 heraus in die Drucklufteinheit 20 hinein, insbesondere in die Druckluft-Förderleitung 110 hinein, zu sperren. In alternativen Ausführungsbeispielen braucht der Baustoff-Druckluftförderer kein Rückschlagventil aufzuweisen.

Im gezeigten Ausführungsbeispiel ist eines der Rückschlagventile 37a an der Oberluftleitung 35 dazu angeordnet, einen Fluss von Baustoff BS aus dem Mischbehälter 32 heraus durch die Oberluftleitung 35 hindurch in die Druckluft-Förderleitung 110 hinein zu sperren. Das andere der Rückschlagventile 37b ist an der Unterluftleitung 36, insbesondere zwischen dem Mischbehälter 32 beziehungsweise seinem Abgangsstutzen 39 und der Druckluft-Förderleitung 110, dazu angeordnet, einen Fluss von Baustoff BS aus dem Mischbehälter 32 heraus durch die Unterluftleitung 36 hindurch in die Druckluft-Förderleitung 110 hinein zu sperren.

Weiter weist im gezeigten Ausführungsbeispiel die Baustoffeinheit 30 ein, insbesondere elektrisch steuerbares, Unterfreigabe- und Absperrventil 38 in Form eines 2/2 Wegeventils auf. Das Unterfreigabe- und Absperrventil 38 ist an der Unterluftleitung 36, insbesondere zwischen dem Rückschlagventil 37b und der Druckluft-Förderleitung 110, dazu angeordnet, einen Fluss von Druckluft DL aus der Druckluft-Förderleitung 110 heraus durch die Unterluftleitung 36 hindurch in den Mischbehälter 32 beziehungsweise seinen Abgangsstutzen 39 hinein freizugeben oder abzusperren. In alternativen Ausführungsbeispielen braucht die Baustoffeinheit kein Unterfreigabe- und Absperrventil aufzuweisen.

Im Detail weist der Elektrizitätsnetzanschluss 50 einen 32 A-Netzstecker 51 in Form eines Drehstromsteckverbinders auf. Im gezeigten Ausführungsbeispiel ist der Elektrizitätsnetzanschluss 50 beziehungsweise sein 32 A-Netzstecker 51 an einen Baustellennetzanschluss in Form eines Drehstromanschlusses mit einer maximalen Strombelastung begrenzt auf maximal 32 A und mit 400 V beziehungsweise mit einer maximalen Anschlussleistung Pin begrenzt auf maximal 22 kW elektrisch angeschlossen, wie in Fig. 2 zu erkennen.

Zudem ist die Elektroantriebsmotoreinheit 40 für eine elektrische Leistung P40 von mehr als 22 kW ausgebildet.

Des Weiteren ist die Kondensatoreinheit 60 für eine elektrische Leistung P60 von 22 kW ausgebildet. Zusätzlich weist die Kondensatoreinheit eine elektrische Kapazität von minimal 0,1 kWh auf.

Im Detail weist die Kondensatoreinheit 60 einen elektrochemischen Kondensator 61 auf beziehungsweise ist ein elektrochemischer Kondensator 61.

In alternativen Ausführungsbeispielen kann der Elektrizitätsnetzanschluss zusätzlich oder alternativ einen 16 A-Netzstecker und/oder einen 63 A-Netzstecker aufweisen. Weiter zusätzlich oder alternativ können/kann die Elektroantriebsmotoreinheit und/oder die Kondensatoreinheit für eine, insbesondere entsprechende, elektrische Leistung ausgebildet sein und/oder eine, insbesondere entsprechende, elektrische Kapazität aufweisen.

Außerdem weist der Baustoff-Druckluftförderer 10 eine Frequenzumrichtereinheit 70 mit einem Zwischenkreis 71 auf, insbesondere einem Gleichspannungs-Zwischenkreis, wie in Fig. 1 zu erkennen. Der Elektrizitätsnetzanschluss 50 ist mittels der Frequenzumrichtereinheit 70, insbesondere mittels seines Zwischenkreises 71, mit der Elektroantriebsmotoreinheit 40 verbunden. Des Weiteren ist der Elektrizitätsnetzanschluss 50 mittels des Zwischenkreises 71 mit der Kondensatoreinheit 60 verbunden. Die Kondensatoreinheit 60 ist mittels des Zwischenkreises 71 mit der Elektroantriebsmotoreinheit 40 verbunden.

Im Detail weist die Frequenzumrichtereinheit 70 einen Gleichrichter auf, der dazu ausgebildet beziehungsweise vorgesehen ist, den Zwischenkreis 71 zu speisen beziehungsweise im gezeigten Ausführungsbeispiel speist. Der Elektrizitätsanschluss 50 ist mittels des Gleichrichters mit dem Zwischenkreis 71, insbesondere elektrisch, verbunden. Weiter weist die Frequenzumrichtereinheit 70 mindestens einen aus dem Zwischenkreis 71 gespeisten Wechselrichter auf. Der Zwischenkreis 71 ist mittels des mindestens einen Wechselrichters mit der Elektroantriebsmotoreinheit 40, insbesondere elektrisch, verbunden.

Zudem weist der Baustoff-Druckluftförderer 10 einen, insbesondere elektrisch steuerbaren, bidirektionalen Gleichstromsteller 80 auf. Die Kondensatoreinheit 60 ist mittels des bidirektionalen Gleichstromstellers 80 mit dem Zwischenkreis 71 verbunden.

Des Weiteren weist im gezeigten Ausführungsbeispiel der Baustoff-Druckluftförderer 10 eine Drossel 85 auf. Die Kondensatoreinheit 60 ist mittels der Drossel 85 mit dem bidirektionalen Gleichstromsteller 80, insbesondere elektrisch, verbunden. Die Drossel 85 ist dazu ausgebildet beziehungsweise vorgesehen, einen Strom vom Gleichstromsteller 80 zu der oder für die Kondensatoreinheit 60 zu glätten. In alternativen Ausführungsbeispielen braucht der Baustoff-Druckluftförderer keine Drossel aufzuweisen.

Außerdem weist im gezeigten Ausführungsbeispiel der Baustoff-Druckluftförderer 10 einen, insbesondere elektrisch auslesbaren, Leistungsmesssensor 86 auf. Der Elektrizitätsanschluss 50 ist mittels des Leistungsmesssensors 86 mit der Frequenzumrichtereinheit 70 beziehungsweise ihrem Gleichrichter, insbesondere elektrisch, verbunden. Der Leistungsmesssensor 86 ist dazu ausgebildet beziehungsweise vorgesehen, eine Leistung am Elektrizitätsanschluss 50 zu messen. In alternativen Ausführungsbeispielen braucht der Baustoff-Druckluftförderer keinen Leistungsmesssensor aufzuweisen.

Weiter weist der Baustoff-Druckluftförderer 10 eine Steuereinheit 90 auf. Die Steuereinheit 90 ist dazu ausgebildet, den Baustoff-Druckluftförderer 10 derart anzusteuern, dass vor einer Förderung eines Flusses von Baustoff BS die Kondensatoreinheit 60 elektrische Leistung Pex vom Elektrizitätsnetzanschluss 50 aufnimmt und dass zur Förderung eines Flusses von Baustoff BS mindestens zu Beginn die Kondensatoreinheit 60 elektrische Leistung Pde an die Elektroantriebsmotoreinheit 40 abgibt, wie in Fig. 2 zu erkennen.

Zudem weist die Elektroantriebsmotoreinheit 40 einen ersten Elektromotor 41 auf, der zum Antrieb der Drucklufteinheit 20 beziehungsweise ihrer Luftkompressoreinheit 21 ausgebildet ist. Des Weiteren weist die Elektroantriebsmotoreinheit 40 einen zweiten Elektromotor 42 auf, der zum Antrieb der Baustoffeinheit 30 beziehungsweise ihrer Mischeinheit 31 beziehungsweise ihres Mischwerks 33 ausgebildet ist. Die Steuereinheit 90 ist dazu ausgebildet, ein Verhältnis zwischen einer elektrischen Leistung P41 für den ersten Elektromotor 41 und einer elektrischen Leistung P42 für den zweiten Elektromotor 42 zu verändern.

Im gezeigten Ausführungsbeispiel weist die Frequenzumrichtereinheit 70 zwei aus dem Zwischenkreis 71 gespeiste Wechselrichter auf. Der Zwischenkreis 71 ist mittels des einen Wechselrichters mit dem ersten Elektromotor 41 verbunden und mittels des anderen Wechselrichters mit dem zweiten Elektromotor 42 verbunden. Dies kann als Zwischenkreisverbund bezeichnet werden.

Außerdem weist im gezeigten Ausführungsbeispiel der Baustoff-Druckluftförderer 10 beziehungsweise seine Steuereinheit 90 ein benutzerbetätigbares Bedienfeld 95 zur Bedienung des Baustoff-Druckluftförderers 10 auf, insbesondere zum Beginnen der Förderung. In alternativen Ausführungsbeispielen braucht der Baustoff-Druckluftförderer kein Bedienfeld aufzuweisen.

Im gezeigten Ausführungsbeispiel ist die Steuereinheit 90 mit der Luftkompressoreinheit 21, dem Ansaugregler 22, dem Regelventil 23, dem Unterfreigabe- und Absperrventil 38, der Frequenzumrichtereinheit 70 beziehungsweise ihrem mindestens einen Wechselrichter, dem Gleichstromsteller 80, dem Leistungsmesssensor 86 und dem Bedienfeld 95 jeweils, insbesondere elektrisch, gekoppelt, wie in Fig. 1 durch gepunktete Linien angedeutet. Im Detail ist die Steuereinheit 90 dazu ausgebildet, die Luftkompressoreinheit 21, den Ansaugregler 22, das Regelventil 23, das Unterfreigabe- und Absperrventil 38, die Frequenzumrichtereinheit 70 beziehungsweise ihren mindestens einen Wechselrichter und den Gleichstromsteller 80 anzusteuern.

Des Weiteren dauert im gezeigten Ausführungsbeispiel der typische Arbeitszyklus des Baustoff-Druckluftförderers 10 etwa 6 min, wie in Fig. 2 zu erkennen. Etwa 3 min wird die Mischeinheit 31 beziehungsweise ihr Mischbehälter 32 mit Baustoff BS befüllt und der Baustoff BS wird gemischt, insbesondere mittels der Mischeinheit 31 beziehungsweise ihres Mischwerks 33. Dann wird die Förderung gestartet, indem die erzeugte Druckluft DL von der Drucklufteinheit 20 beziehungsweise ihrer Luftkompressoreinheit 21 in die Baustoffeinheit 30 beziehungsweise ihre Mischeinheit 31 beziehungsweise ihren Mischbehälter 32 beziehungsweise ihren Abgangsstutzen 39 hineingeleitet wird. Die Förderung dauert etwa 3 min. In alternativen Ausführungsbeispielen kann der Arbeitszyklus zeitlich kürzer oder länger sein.

Im Detail steuert vor der Förderung die Steuereinheit 90 die Frequenzumrichtereinheit 70 derart an, dass der erste Elektromotor 41 die Drucklufteinheit 20 beziehungsweise ihre Luftkompressoreinheit 21 kaum oder nicht antreibt. Des Weiteren steuert die Steuereinheit 90 den Ansaugregler 22 derart an, dass der Ansaugregler 22 einen Fluss von angesaugter Luft AL herunterregelt, insbesondere unterbindet. In anderen Worten: der Ansaugregler wird geschlossen. Außerdem steuert die Steuereinheit 90 das Regelventil 23 derart an, dass das Regelventil 23 einen Fluss von Druckluft DL aus der Drucklufteinheit 20 heraus beziehungsweise von ihrer Luftkompressoreinheit 21 durch die Druckluft-Förderleitung 110 hindurch in die Baustoffeinheit 30 hinein absperrt.

Somit ist vor der Förderung ein Leistungsbedarf P41 des ersten Elektromotors 41 gering oder nicht vorhanden, wie in Fig. 2 zu erkennen.

Weiter steuert vor der Förderung die Steuereinheit 90 die Frequenzumrichtereinheit 70 derart an, dass der zweite Elektromotor 42 die Baustoffeinheit 30 beziehungsweise ihre Mischeinheit 31 beziehungsweise ihr Mischwerk 33 antreibt.

Somit ist vor der Förderung ein Leistungsbedarf P42 des zweiten Elektromotors 42 vorhanden. Im Detail steigt der Leistungsbedarf P42 des zweiten Elektromotors 42 mit Befüllung der Mischeinheit 31 beziehungsweise ihres Mischbehälters 32 mit Baustoff BS, bleibt jedoch unterhalb der von dem Baustellennetzanschluss beziehungsweise an dem Elektrizitätsnetzanschluss 50 bereitgestellten maximalen Anschlussleistung Pin begrenzt auf maximal 22 kW.

Folglich ist vor der Förderung der Leistungsbedarf P40 der Elektromotorantriebseinheit 40 gering. Dies erfasst die Steuereinheit 90 mittels des Leistungsmesssensors 86. Daher steuert die Steuereinheit 90 den bidirektionalen Gleichstromsteller 80 derart an, dass die Kondensatoreinheit 60 die von der Elektroantriebsmotoreinheit 40 nicht benötigte elektrische Leistung Pex vom Elektrizitätsanschluss 50 aufnimmt.

Zur Förderung steuert die Steuereinheit 90 die Frequenzumrichtereinheit 70 derart an, dass der erste Elektromotor 41 die Drucklufteinheit 20 beziehungsweise ihre Luftkompressoreinheit 21 antreibt. Des Weiteren steuert die Steuereinheit 90 den Ansaugregler 22 derart an, dass der Ansaugregler 22 einen Fluss von angesaugter Luft AL hochregelt. In anderen Worten: der Ansaugregler wird geöffnet. Außerdem steuert die Steuereinheit 90 das Regelventil 23 und zusätzlich das Unterfreigabe- und Absperrventil 38 derart an, dass das Regelventil 23 und zusätzlich das Unterfreigabe- und Absperrventil 38 einen Fluss von Druckluft DL aus der Drucklufteinheit 20 heraus beziehungsweise von ihrer Luftkompressoreinheit 21 durch die Druckluft-Förderleitung 110 hindurch in die Baustoffeinheit 30 beziehungsweise ihre Mischeinheit 31 beziehungsweise ihren Mischbehälter 32 beziehungsweise ihren Abgangsstutzen 39 hinein freigibt.

Die Erzeugung der Druckluft DL durch die Drucklufteinheit 20 beziehungsweise ihre Luftkompressoreinheit 21 und somit eine einsetzende Belastung der Drucklufteinheit 20 beziehungsweise ihrer Luftkompressoreinheit 21 führt dazu, dass zur Förderung ein Leistungsbedarf P41 des ersten Elektromotors 41 hoch ist, insbesondere höher als die beziehungsweise oberhalb der von dem Baustellennetzanschluss beziehungsweise an dem Elektrizitätsnetzanschluss 50 bereitgestellten maximalen Anschlussleistung Pin begrenzt auf maximal 22 kW, wie in Fig. 2 zu erkennen.

Weiter steuert zur Förderung die Steuereinheit 90 die Frequenzumrichtereinheit 70 derart an, dass der zweite Elektromotor 42 die Baustoffeinheit 30 beziehungsweise ihre Mischeinheit 31 beziehungsweise ihr Mischwerk 33 weiter antreibt.

Die Befüllung, insbesondere eine mögliche Überfüllung, der Baustoffeinheit 30 beziehungsweise ihrer Mischeinheit 31 beziehungsweise ihres Mischbehälters 32 führt dazu, dass zur Förderung ein Leistungsbedarf P42 des zweiten Elektromotors 42, insbesondere weiter, vorhanden ist.

Folglich ist zur Förderung der Leistungsbedarf P40 der Elektromotorantriebseinheit 40 hoch, insbesondere bis sich Baustoff BS in Form einer Pfropfenförderung aus der Baustoffeinheit 30 heraus in Bewegung setzt. Im gezeigten Ausführungsbeispiel entsteht beziehungsweise dauert der erhöhte Leistungsbedarf P40 der Elektromotorantriebseinheit 40 für 30 bis 60 Sekunden an.

Zwar erfasst die Steuereinheit 90 mittels des Leistungsmesssensors 86 den hohen Leistungsbedarf P40 der Elektromotorantriebseinheit 40 beziehungsweise ihres ersten Elektromotors 41. Daher steuert die Steuereinheit 90 die Frequenzumrichtereinheit 70 derart an, dass der zweite Elektromotor 42 die Baustoffeinheit 30 beziehungsweise ihre Mischeinheit 31 beziehungsweise ihr Mischwerk 33 weniger antreibt. In anderen Worten: zur Förderung wird die Mischerdrehzahl gegenüber vor der Förderung zurückgenommen.

Jedoch bleibt der Leistungsbedarf P40 der Elektromotorantriebseinheit 40 hoch, insbesondere höher als 22 kW.

Daher steuert die Steuereinheit 90 den bidirektionalen Gleichstromsteller 80 derart an, dass die Kondensatoreinheit 60 die von der Elektroantriebsmotoreinheit 40 benötigte elektrische Leistung Pde zusätzlich zur elektrischen Leistung Pin vom Elektrizitätsnetzanschluss 50 an die Elektroantriebsmotoreinheit 40 beziehungsweise ihren ersten Elektromotor 41 abgibt. In anderen Worten: den, insbesondere kurzzeitigen, hohen Leistungsbedarf P40, insbesondere von mehr als 22 kW, der Elektroantriebsmotoreinheit 40 decken der Elektrizitätsnetzanschluss 50 beziehungsweise der Baustellennetzanschluss und zusätzlich die Kondensatoreinheit 60 gleichzeitig beziehungsweise gemeinsam.

Vor und/oder nach dem hohen Leistungsbedarf P40 der Elektroantriebsmotoreinheit 40 beziehungsweise während des gesamten Arbeitszyklus bei Leistungsreserve kann die Kondensatoreinheit 60 aufgeladen werden.

Im gezeigten Ausführungsbeispiel ist der Baustoff-Druckluftförderer 10 als mobiler Baustoff-Druckluftförderer ausgebildet, insbesondere als Anhänger, wie in Fig. 3 zu erkennen. In alternativen Ausführungsbeispielen braucht der Baustoff-Druckluftfördere nicht als mobiler Baustoff-Druckluftförderer ausgebildet zu sein.

Im Detail weist der Baustoff-Druckluftförderer ein Fahrgestell 100 auf, insbesondere mit Rädern und einer Anhängerkupplung. Das Fahrgestell 100 trägt die Drucklufteinheit 20, die Baustoffeinheit 30, die Elektroantriebsmotoreinheit 40, den Elektrizitätsnetzanschluss 50 und die Kondensatoreinheit 60. Zusätzlich trägt im gezeigten Ausführungsbeispiel das Fahrgestell 100 das mindestens eine Rückschlagventil 37a, 37b, die Frequenzumrichtereinheit 70, den Gleichstromsteller 80, die Drossel 85, den Leistungsmesssensor 86, die Steuereinheit 90 und die Druckluft-Förderleitung 110.

Wie die gezeigten und oben erläuterten Ausführungsbeispiele deutlich machen, stellt die Erfindung einen vorteilhaften Baustoff-Druckluftförderer bereit, der eine möglichst hohe Leistung bei begrenzt zur Verfügung stehender elektrischer Anschlussleistung ermöglicht.

## Patentansprüche

1. Baustoff-Druckluftförderer (10), aufweisend:
- eine Drucklufteinheit (20), die zur Erzeugung von Druckluft (DL) ausgebildet ist,
- eine Baustoffeinheit (30), die zur Bereitstellung von Baustoff (BS) ausgebildet ist und mit der Drucklufteinheit (20) für einen Fluss von Druckluft (DL) aus der Drucklufteinheit (20) heraus in die Baustoffeinheit (30) hinein zur Förderung eines Flusses von Baustoff (BS) mittels Druckluft (DL) aus der Baustoffeinheit (30) heraus verbunden ist,
- eine Elektroantriebsmotoreinheit (40), die zum Antrieb des Baustoff-Druckluftförderers (10) ausgebildet ist,
- einen Elektrizitätsnetzanschluss (50), der mit der Elektroantriebsmotoreinheit (40) zur Speisung der Elektroantriebsmotoreinheit (40) mit elektrischer Leistung (Pin) verbunden ist, und
- eine Kondensatoreinheit (60), die mit dem Elektrizitätsnetzanschluss (50) zur Aufnahme von der Elektroantriebsmotoreinheit (40) nicht benötigter elektrischer Leistung (Pex) vom Elektrizitätsnetzanschluss (50) verbunden und ausgebildet ist, und die mit der Elektroantriebsmotoreinheit (40) zur Abgabe von der Elektroantriebsmotoreinheit (40) benötigter elektrischer Leistung (Pde) zusätzlich zur elektrischen Leistung (Pin) vom Elektrizitätsnetzanschluss (50) verbunden und ausgebildet ist.

2. Baustoff-Druckluftförderer (10) nach Anspruch 1,
- wobei der Elektrizitätsnetzanschluss (50) einen 32 A-Netzstecker (51) aufweist.

3. Baustoff-Druckluftförderer (10) nach einem der vorhergehenden Ansprüche,
- wobei die Elektroantriebsmotoreinheit (40) für eine elektrische Leistung (P40) von mehr als 22 kW ausgebildet ist.

4. Baustoff-Druckluftförderer (10) nach einem der vorhergehenden Ansprüche, wobei die Kondensatoreinheit (60)
- für eine elektrische Leistung (P60) von minimal 5 kW, insbesondere von minimal 10kW, insbesondere von minimal 15 kW, insbesondere von 22 kW, ausgebildet ist und/oder
- eine elektrische Kapazität (C) von minimal 0,1 kWh, insbesondere von minimal 0,2 kWh, insbesondere von minimal 0,5 kWh, aufweist.

5. Baustoff-Druckluftförderer (10) nach einem der vorhergehenden Ansprüche,
- wobei die Kondensatoreinheit (60) mindestens einen elektrochemischen Kondensator (61) aufweist.

6. Baustoff-Druckluftförderer (10) nach einem der vorhergehenden Ansprüche, aufweisend:
- eine Frequenzumrichtereinheit (70) mit einem Zwischenkreis (71),
- wobei der Elektrizitätsnetzanschluss (50) mittels der Frequenzumrichtereinheit (70) mit der Elektroantriebsmotoreinheit (40) verbunden ist,
- wobei der Elektrizitätsnetzanschluss (50) mittels des Zwischenkreises (71) mit der Kondensatoreinheit (60) verbunden ist, und
- wobei die Kondensatoreinheit (60) mittels des Zwischenkreises (71) mit der Elektroantriebsmotoreinheit (40) verbunden ist.

7. Baustoff-Druckluftförderer (10) nach Anspruch 6, aufweisend:
- einen bidirektionalen Gleichstromsteller (80), wobei die Kondensatoreinheit (60) mittels des bidirektionalen Gleichstromstellers (80) mit dem Zwischenkreis (71) verbunden ist.

8. Baustoff-Druckluftförderer (10) nach einem der vorhergehenden Ansprüche, aufweisend:
- eine Steuereinheit (90), die dazu ausgebildet ist, den Baustoff-Druckluftförderer (10) derart anzusteuern,
- dass vor einer Förderung eines Flusses von Baustoff (BS) die Kondensatoreinheit (60) elektrische Leistung (Pex) vom Elektrizitätsnetzanschluss (50) aufnimmt und
- dass zur Förderung eines Flusses von Baustoff (BS) mindestens zu Beginn die Kondensatoreinheit (60) elektrische Leistung (Pde) an die Elektroantriebsmotoreinheit (40) abgibt.

9. Baustoff-Druckluftförderer (10) nach einem der vorhergehenden Ansprüche,
- wobei die Elektroantriebsmotoreinheit (40) einen ersten Elektromotor (41), der zum Antrieb der Drucklufteinheit (20) ausgebildet ist, und einen von dem ersten verschiedenen, zweiten Elektromotor (42) aufweist, der zum Antrieb der Baustoffeinheit (30) ausgebildet ist,
- wobei der Baustoff-Druckluftförderer (10) eine Steuereinheit (90) aufweist, die dazu ausgebildet ist, ein Verhältnis zwischen einer elektrischen Leistung (P41) für den ersten Elektromotor (41) und einer elektrischen Leistung (P42) für den zweiten Elektromotor (42) zu verändern.

10. Baustoff-Druckluftförderer (10) nach einem der vorhergehenden Ansprüche,
- wobei die Drucklufteinheit (20) eine Luftkompressoreinheit (21) aufweist, die zur Erzeugung von Druckluft (DL) ausgebildet ist, und
- wobei die Elektroantriebsmotoreinheit (40) zum Antrieb der Luftkompressoreinheit (21) ausgebildet ist.

11. Baustoff-Druckluftförderer (10) nach einem der vorhergehenden Ansprüche,
- wobei die Baustoffeinheit (30) eine Mischeinheit (31) aufweist, die zur Mischung von Baustoff (BS) ausgebildet ist, und
- wobei die Elektroantriebsmotoreinheit (40) zum Antrieb der Mischeinheit (31) ausgebildet ist.

12. Baustoff-Druckluftförderer (10) nach einem der vorhergehenden Ansprüche,
- wobei der Baustoff-Druckluftförderer (10) als mobiler Baustoff-Druckluftförderer ausgebildet ist.

13. Baustoff-Druckluftförderer (10) nach Anspruch 12, aufweisend:
- ein Fahrgestell (100), das die Drucklufteinheit (20), die Baustoffeinheit (30), die Elektroantriebsmotoreinheit (40), den Elektrizitätsnetzanschluss (50) und die Kondensatoreinheit (60) trägt.
